# EUROPEAN PATENT SPECIFICATION

(11) **EP 4 585 631 B1**
(45) Date of publication and mention of the grant of the patent: **25.11.2026**
(21) Application number: 25178569.7
(22) Date of filing: 12.05.2020
(51) Int. Cl.: A43B 7/32, A43B 13/04, A43B 13/12, C08G 18/42, C08G 18/48, C08G 18/76, A43B 7/144, A43B 13/14, A43B 13/18, A43B 21/26

(54) **MULTI-PURPOSE SAFETY SHOE**
MEHRZWECK-SICHERHEITSSCHUH
CHAUSSURE DE SÉCURITÉ POLYVALENTE

(30) Priority: 17.05.2019 IT 201900006942
(43) Date of publication of application: 16.07.2025
(62) Document number(s) of the earlier application(s) in accordance with Art. 76 EPC: 24161989.9 / 4 393 339; 20730326.4 / 3 968 806
(73) Proprietor: U-POWER GROUP S.P.A., 28040 Paruzzaro (NO) (IT)
(72) Inventor: UZZENI, Pier Franco, 28041 Dagnente, Arona (NO) (IT)
(74) Representative: Cevini, Gaia

(56) References cited:
- WO-A1-2017/072202
- WO-A1-2018/207147
- WO-A1-2019/008453
- CN-A- 104 106 876

## Description

The present invention relates to a multi-purpose safety shoe.

Safety shoes are known from the state of the art, which are capable of providing the user with a desired degree of protection in case of accidental events.

As is known, professional work shoes are to comply with stringent standards, included among which are:
- EN ISO 20345, relative to safety footwear with shoe toe resistance at 200 J;
- EN ISO 20346, relative to safety footwear with shoe toe resistance at 100 J;
- EN ISO 20344, relative to testing methods and general requirements.

In particular, in order to be defined as safety or accident-prevention shoes, work shoes are to be provided with a safety toe cap and therefore comply with Standards EN ISO 20344, EN ISO 20345 and EN ISO 20346.

Safety shoes therefore comprise an upper assembly provided, at the shoe toe, with a safety toe cap that is sufficiently structured, and therefore rigid, to resist knocks or crushing, thus protecting the user's foot.

In general, since these are work shoes, they are intended to be worn by the user continuously for several hours a day.

Safety shoes are currently known, which are provided with a layered sole comprising therein an insert made of an elastic material, for example of the expanded thermoplastic polyurethane type, which is adapted to make walking, and in general all activities in which the user is continuously moving, more comfortable thanks to the increased energy rebound and the soft and dynamic cushioning provided by the elastic insert itself.

Document WO 2019/008453 relates to a multi-purpose safety shoe according to the preamble of claim 1.

However, many work activities for which it is required to wear safety shoes require frequently alternating between activities involving continuous movements of the operator from one place to another, and activities which instead are more sedentary, in which the operator is required to work in a standing position, stopped in a work station for prolonged periods of time.

As is known however, maintaining the standing position for prolonged periods of time involves stress and discomfort for the musculoskeletal apparatus.

It is a main task of the present invention to make a multi-purpose safety shoe that is capable of ensuring a high level of comfort for the user both during activities involving continuous movement and during sedentary activities.

Within the scope of this task, it is an object of the present invention to make a multi-purpose safety shoe that meets the requirements of any type of user.

It is another object again of the invention to make a multi-purpose safety shoe that is capable of providing the broadest guarantees in terms of reliability and safety in use, and that simultaneously is also easy and affordable to make when compared with the known technique.

The task disclosed above, and also the objects mentioned and others which are more apparent below, are achieved by a multi-purpose safety shoe as illustrated in claim 1.

Other features are provided in the dependent claims.

Further features and advantages shall be more apparent from the description of a preferred, but not exclusive, embodiment of a multi-purpose safety shoe, illustrated by mere way of non-limiting example with the aid of the accompanying drawings, in which:

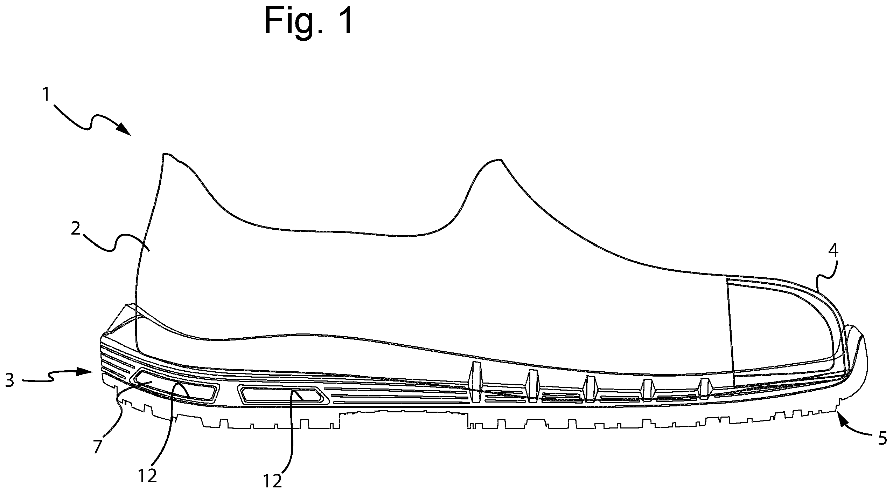

figure 1 is a lateral raised schematic assembly view of an embodiment of a multi-purpose safety shoe according to the invention;

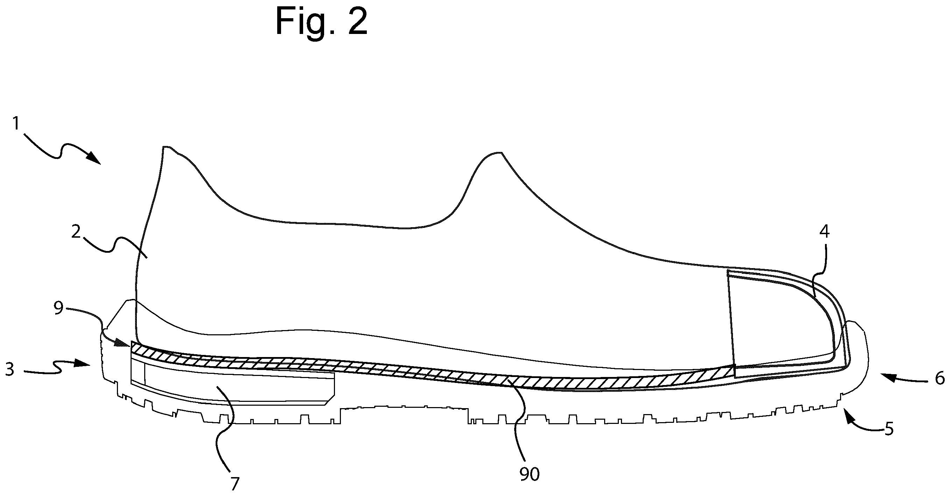

figure 2 is a different lateral raised schematic assembly view of the multi-purpose safety shoe of figure 1;
figure 3 is a lateral exploded view of the multi-purpose safety shoe of figure 1, according to the invention;

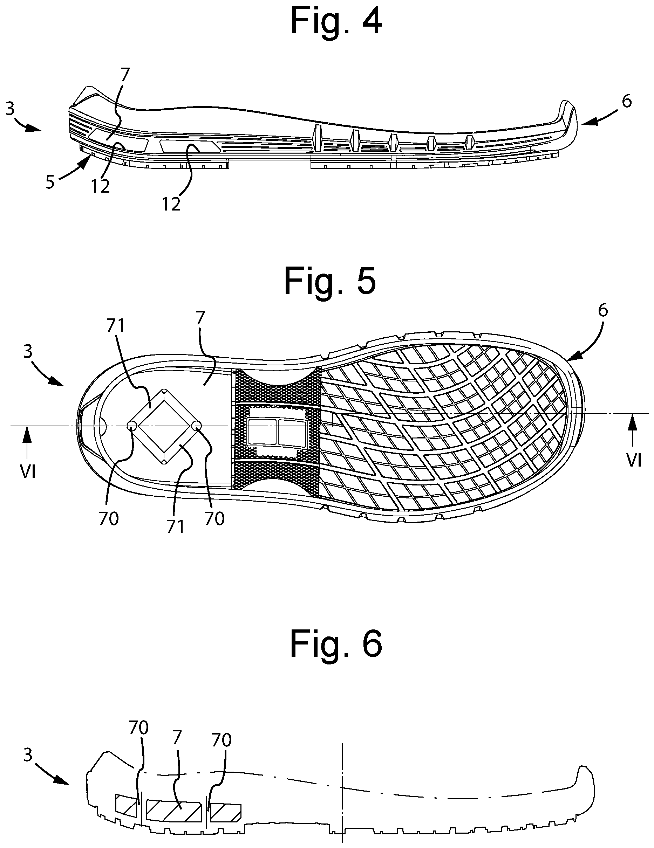

figure 4 is a lateral view of the peripheral part of the layered sole of the multi-purpose safety shoe of figure 1;
figure 5 is top plan view of the peripheral part of the layered sole of figure 4;
figure 6 is a partial sectional view of the peripheral part of the layered sole of figure 5, according to axis VI-VI;

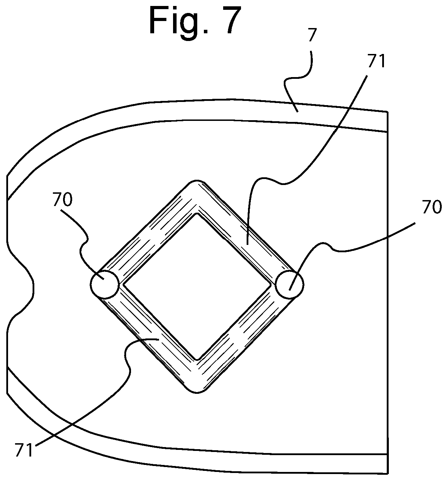

figure 7 shows a top plan view of an antifatigue insert in the rear zone of the shoe of figure 1, according to the invention.

With reference to the mentioned drawings, the multi-purpose safety shoe, indicated as a whole with reference numeral 1, comprises an upper assembly 2 provided, at the shoe toe, with a safety toe cap 4, and a layered sole 3 associated with the upper assembly 2. Such layered sole 3 comprises a lower layer 5, i.e. tread, adapted to come into contact with the ground, an intermediate layer 6 associated with the upper assembly 2 and with the lower layer 5, respectively, and an upper layer 9.

According to the invention, there is, below the upper layer 9 and in the intermediate layer 6, exclusively at the rear zone of said multi-purpose safety shoe 1, i.e. at the heel, an antifatigue insert 7 made of a material having a resilience greater than 25% and less than 35%. Again according to the invention, the intermediate layer 6 is made of polyurethane having a resilience greater than 35% and less than 45%.

The aforesaid resilience values of the materials with which the antifatigue insert 7 and the intermediate layer 6 are made are measured according to the measurement standard DIN 53512 ("Determining the rebound resilience of rubber using the Schob pendulum") and depict the ratio between the rebound energy by an elastomer subjected to a knock and the energy applied to such elastomer during the knock itself.

The increased resilience value of the polyurethane with which the intermediate layer 6 is made therefore gives the multi-purpose safety shoe 1 good features of elastic rebound of the energy of the walk, thus reducing the fatigue of the user during activities involving movement. At the same time, the presence of the antifatigue insert 7 in the heel, which has a smaller resilience value, gives the multi-purpose safety shoe 1 also an increasingly comfortable behaviour in static situations in which the user remains in a standing position, stationary on the spot, for also prolonged periods of time, thanks to the static support effect provided by the antifatigue insert 7 at the user's heel, where the weight thereof is most discharged.

Preferably, the intermediate layer 6 is made of polyurethane having a resilience greater than 41%.

The fact that the antifatigue insert 7 is made of a material with resilience that is less than the resilience of the polyurethane with which the intermediate layer 6 of the layered sole 3 is made, and preferably about 5 percentage points less, provides the safety shoe 1 with an optimal compromise between an increased bearing capacity in static conditions, ensured by the antifatigue insert 7, and good elastic rebound of energy in dynamic conditions, ensured instead by the increased resilience of the polyurethane with which the intermediate layer 6 is made.

Advantageously, the intermediate layer 6 is made of polyurethane having a hardness between 30 and 45 Shore A.

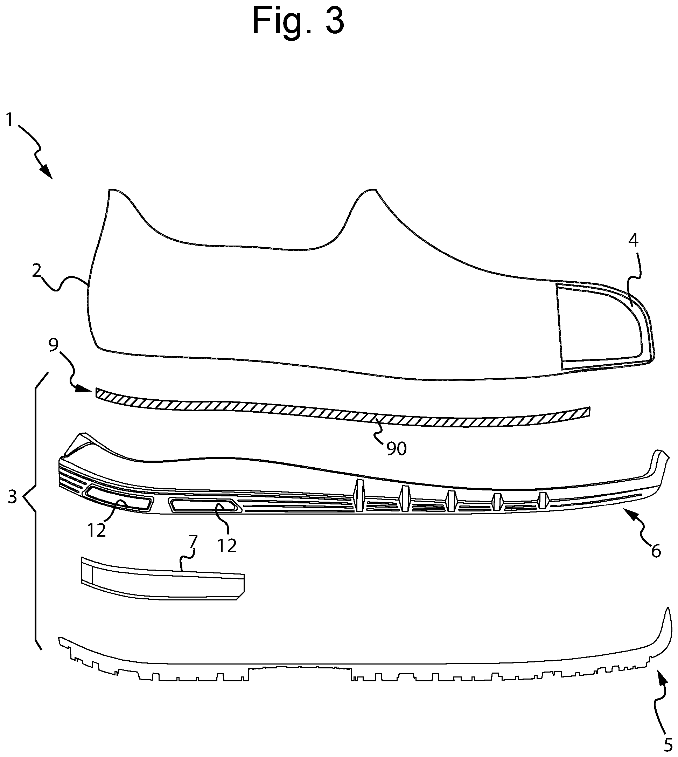

As illustrated in particular in figure 3, the intermediate layer 6 of the layered sole 3 extends over the whole resting surface of the foot and, with the exception of the part involved by the antifatigue insert 7, is completely and exclusively made of said polyurethane having a resilience greater than 35% and less than 45%, preferably greater than 41%.

Moreover, the intermediate layer 6 advantageously is made of polyurethane having a moulding density less than 0.43 g/cm³.

Preferably, the melding density of said polyurethane is between 0.37 and 0.41 g/cm³ according to the environmental moulding conditions, in particular relative to the room temperature and room humidity level. Under optimal environmental conditions, the melding density of said polyurethane is equal to 0.39 g/cm³.

The use of a polyurethane having a moulding density less than 0.43 g/cm³ gives the layered sole 3, and therefore the shoe 1 as a whole, good lightweightness.

The greater resilience of 35% and the lesser moulding density of 0.43 g/cm³ of the polyurethane with which the intermediate layer 6 of the layered sole 3 is made allow obtaining a lightweight and performing multi-purpose safety shoe 1 in terms of dynamic properties, and therefore a shoe that is easy and comfortable to wear and use for prolonged periods of time.

Advantageously, the polyurethane with which the intermediate layer 6 is made has a tensile strength, measured according to the measurement method DIN 53504, between 3.5 and 5 MPa, and/or an elongation at break, measured according to the measurement method DIN 53504, between 350 and 500%.

Advantageously, the antifatigue insert 7 comprises at least one polyol polymer.

Such polyol polymer preferably is a polyol polyester.

In an alternative embodiment, the polyol polymer may also be a polyol polyether.

Advantageously, the antifatigue insert 7 may be made of a bicomponent material comprising at least one polyol polymer, such as for example, a polyol polyester or a polyol polyether, and an isocyanate.

Preferably, the isocyanate is a diphenylmethane diisocyanate, and even more preferably a 4,4'-diphenylmethane diisocyanate.

The bicomponent material also comprises an amine catalyst.

Preferably, in particular when a polyol polyester is used, the amine catalyst is a tertiary aliphatic amine.

Advantageously, the bicomponent material comprises said polyester polyol polymer and said isocyanate in a ratio of 100:54 parts by weight, respectively.

In the alternative embodiment with polyol polyether, the bicomponent material comprises said polyether polyol polymer and said isocyanate in a ratio of 100:52 parts by weight, respectively.

Therefore, the antifatigue insert 7 advantageously is made of a polyurethane obtained from the polymerisation of a polyol, preferably polyester, with an isocyanate, which differs from the expanded thermoplastic polyurethanes used for the inserts made of elastic materials in the safety shoes of known type mentioned in the introduction, due to less resilience. Such lower resilience is also due to the absence of expanding agents which instead give increased resilience properties to the expanded thermoplastic polyurethanes. Therefore, the antifatigue insert 7 advantageously is made of an unexpanded polyurethane.

The material with which the antifatigue insert 7 is made advantageously has a density, measured according to the method ISO 845, between 0.3 and 0.36 g/cm³, and preferably of about 0.35 g/cm³.

Moreover, such material has a *Shore* A hardness, measured according to the method DIN 53 505, advantageously between 20 and 25, and preferably equal to 22 or 23.

Again, such material has a tensile strength, measured according to the method DIN 53 504, advantageously between 1.5 and 3.5 MPa, and preferably between 2.8 and 3.0 MPa.

Again, such material has an elongation at break, measured according to the method DIN 53 504, between 200 and 500%, and preferably greater than 400%.

Advantageously, if the antifatigue insert 7 is made with polyol polyester, the absolute compatibility is guaranteed with the polyurethane material with which the intermediate layer 6 of the layered sole 3 is made, where the antifatigue insert 7 is housed, and therefore the moulding and assembly procedures of the components making the layered sole 3 itself are particularly simplified.

Advantageously, the antifatigue insert 7 has thickness greater than 8 millimetres and less than 25 millimetres, preferably of about 12 millimetres.

Such minimum thickness of at least 8 millimetres of the antifatigue insert 7, combined with the materials with which such antifatigue insert 7 is made, and therefore combined with the resilience properties described, allow the multi-purpose safety shoe 1 to discharge the user's weight in static situations in an optimal manner.

Advantageously, the antifatigue insert 7 extends, at the rear zone of the multi-purpose safety shoe 1, substantially over a surface comprised between 20% and 55% of the total surface of the layered sole 3, and preferably comprised between 20% and 35%, and even more preferably about 27%.

Advantageously, the antifatigue insert 7 extends, at the rear zone of the multi-purpose safety shoe 1, for a length comprised between 20% and 60% of the overall length of the layered sole 3, and preferably comprised between 22% and 40%, and even more preferably about 30%.

Since in terms of width, the antifatigue insert 7 is slightly narrower than the intermediate layer 6, and since the front zone of the layered sole 3 is slightly wider and broader than the rear zone of the layered sole, the percentage length values of the antifatigue insert 7, such as the ones disclosed above, are slightly greater than the corresponding percentage values of surface extension of the antifatigue insert 7, such as the ones disclosed above.

In any case, the aforesaid sizes of the antifatigue insert 7 on the one hand, allow an adequate resting surface for the heel of the user's foot to be provided in order to discharge the user's weight in static conditions, and on the other, for the intermediate layer 6 made of more resilient polyurethane to adequately exert its rebound energy functions during dynamic activities.

Advantageously, the antifatigue insert 7 also comprises one or more through holes 70 that passes through the thickness of the antifatigue insert 7 itself. In this manner, the material with which the intermediate layer 6 is made may, during the moulding steps, flow and fill such through holes 70, thus ensuring a stable positioning of the antifatigue insert 7 in the layered sole 3.

Advantageously, the antifatigue insert 7 may also comprise one or more open channels 71 obtained on the upper and/or lower surfaces of the insert itself, in communication with said one or more through holes 70. In this manner, the material with which the intermediate layer 6 is made may, during the moulding steps, flow into and fill also such open channels 71, thus further promoting the antifatigue insert 7 to be retained in the intermediate layer 6.

As mentioned, the presence of the safety toe cap 4 allows the shoe 1 to meet the current safety standards, and in particular Standards EN ISO 20344 and EN ISO 20345, or also Standard EN ISO 20346.

The safety toe cap 4 may be provided with holes and comprise a protective membrane provided to close the aforesaid holes in order to simultaneously ensure the breathing and protection of the user's foot.

Advantageously, the lower layer 5 may be made of polyurethane having a moulding density that is greater than 0.90 g/cm³.

The use of polyurethane also for the lower layer 5, in addition to the intermediate layer 6, allows facilitating the operations of making the layered sole 3 itself, thanks to the chemical/physical compatibility of the two materials.

Advantageously, the upper layer 9 may comprise, or consist of, an anti-perforation lamina 90.

Preferably, the anti-perforation lamina 90 is in direct contact with the upper face of the antifatigue insert 7.

It has in practice been established that the multi-purpose safety shoe according to the present invention absolves the task and also the pre-set objects because it is comfortable to wear and use, both during dynamic and static activities.

Another advantage of the multi-purpose safety shoe according to the invention consists in the fact of being equally comfortable both during prolonged periods of dynamic activity and during prolonged periods of stationary activity of the user.

Another advantage of the multi-purpose safety shoe according to the invention consists in the fact of ensuring the user is provided with a significant energy rebound during walking albeit while having a less resilient insert in the heel, and therefore also capable overall of supporting and discharging the weight of the user during stationary activities.

The multi-purpose safety shoe thus conceived is susceptible to many modifications and variants, all falling within the same inventive scope as defined by the appended claims. In practice, the materials used, as well as their dimensions, can be of any type according to the technical requirements.

In practice, the materials used, provided they are compatible with the specific use, as well as the contingent dimensions and shapes, may be of any type depending on the needs.

## Claims

1. Multi-purpose safety shoe (1), comprising an upper assembly (2), provided, at the shoe toe, with a safety toe cap (4) and a layered sole (3) associated with said upper assembly (2), said layered sole (3) comprising a lower layer (5) adapted to come into contact with the ground, an intermediate layer (6) associated with said upper assembly (2) and said lower layer (5), respectively, and an upper layer (9),
**characterized in that**
there is, below said upper layer (9) and in said intermediate layer (6), an antifatigue insert (7) extends, in a rear zone of said multi-purpose safety shoe (1), substantially over a surface comprised between 20% and 55% of the total surface of said layered sole (3), made of a material having a resilience greater than 25% and less than 35% measured according to the measurement standard DIN 53512, said intermediate layer (6) being made of polyurethane having a resilience greater than 35% and less than 45% measured according to the measurement standard DIN 53512.

2. Multi-purpose safety shoe (1) according to claim 1, **characterized in that** said intermediate layer (6) is made of polyurethane having a resilience greater than 41%.

3. Multi-purpose safety shoe (1) according to claim 1 or 2, **characterized in that** said antifatigue insert (7) comprises at least one polyol polymer.

4. Multi-purpose safety shoe (1) according to one or more of the preceding claims, **characterized in that** said intermediate layer (6) is made of polyurethane having a moulding density of less than 0.43 g/cm³, preferably between 0.37 and 0.41 g/cm³.

5. Multi-purpose safety shoe (1) according to one or more of the preceding claims, **characterized in that** said antifatigue insert (7) has a thickness of at least 8 millimetres.

6. Multi-purpose safety shoe (1) according to one or more of the preceding claims, **characterized in that** said antifatigue insert (7) is made of a bicomponent material comprising a polyol polymer and an isocyanate.

7. Multi-purpose safety shoe (1) according to one or more of the preceding claims, **characterized in that** said upper layer (9) consists of an anti-perforation lamina (90).

8. Multi-purpose safety shoe (1) according to one or more of the preceding claims, **characterized in that** said intermediate layer (6) comprises a plurality of windows (12) distributed along lateral surfaces of said intermediate layer (6) at said rear zone of said multi-purpose safety shoe (1), said antifatigue insert (7) exposing lateral surfaces thereof through said windows (12).

9. Multi-purpose safety shoe (1) according to one or more of the preceding claims, **characterized in that** said antifatigue insert (7) comprises one or more through holes (70) which pass through the thickness of said antifatigue insert (7).

10. Multi-purpose safety shoe (1) according to one or more of the preceding claims, **characterized in that** said antifatigue insert (7) is made of material having a moulding density of between 0.3 and 0.36 g/cm³, preferably about 0.35 g/cm³.

11. Multi-purpose safety shoe (1) according to one or more of the preceding claims, **characterized in that** the resilience of said material of which said antifatigue insert (7) is made, measured according to the measurement standard DIN 53512, is less than the resilience of said polyurethane of which said intermediate layer (6) is made, measured according to the measurement standard DIN 53512, preferably at least 5 percentage points less.

12. Multi-purpose safety shoe (1) according to one or more of the preceding claims, **characterized in that** said antifatigue insert (7) is made of unexpanded polyurethane.

13. Multi-purpose safety shoe (1) according to one or more of claims from 7 to 12, **characterized in that** said anti-perforation lamina (90) is in direct contact with an upper face of said antifatigue insert (7).

## Patentansprüche

1. Mehrzweck-Sicherheitsschuh (1), umfassend eine Schaftanordnung (2), die an der Schuhspitze mit einer Sicherheitszehenkappe (4) versehen ist, und eine mehrschichtige Sohle (3), die der Schaftanordnung (2) zugeordnet ist, wobei die mehrschichtige Sohle (3) eine untere Schicht (5), die dazu angepasst ist, mit dem Boden in Kontakt zu kommen, eine Zwischenschicht (6), die jeweils der Schaftanordnung (2) und der unteren Schicht (5) zugeordnet ist, und eine obere Schicht (9) umfasst,
**dadurch gekennzeichnet, dass**
sich unter der oberen Schicht (9) und in der Zwischenschicht (6) eine Ermüdungsschutzeinlage (7) in einem hinteren Bereich des Mehrzweck-Sicherheitsschuhs (1) im Wesentlichen über eine Fläche erstreckt, die zwischen 20 % und 55 % der Gesamtfläche der mehrschichtigen Sohle (3) liegt, hergestellt aus einem Material mit einer Rückprallelastizität von mehr als 25 % und weniger als 35 %, gemessen gemäß der Messnorm DIN 53512, wobei die Zwischenschicht (6) aus Polyurethan mit einer Rückprallelastizität von mehr als 35 % und weniger als 45 %, gemessen gemäß der Messnorm DIN 53512, hergestellt ist.

2. Mehrzweck-Sicherheitsschuh (1) nach Anspruch 1, **dadurch gekennzeichnet, dass** die Zwischenschicht (6) aus Polyurethan mit einer Rückprallelastizität von mehr als 41 % hergestellt ist.

3. Mehrzweck-Sicherheitsschuh (1) nach Anspruch 1 oder 2, **dadurch gekennzeichnet, dass** die Ermüdungsschutzeinlage (7) mindestens ein Polyolpolymer umfasst.

4. Mehrzweck-Sicherheitsschuh (1) nach einem oder mehreren der vorhergehenden Ansprüche, **dadurch gekennzeichnet, dass** die Zwischenschicht (6) aus Polyurethan mit einer Formdichte von weniger als 0,43 g/cm³, vorzugsweise zwischen 0,37 und 0,41 g/cm³, hergestellt ist.

5. Mehrzweck-Sicherheitsschuh (1) nach einem oder mehreren der vorhergehenden Ansprüche, **dadurch gekennzeichnet, dass** die Ermüdungsschutzeinlage (7) eine Dicke von mindestens 8 Millimetern aufweist.

6. Mehrzweck-Sicherheitsschuh (1) nach einem oder mehreren der vorhergehenden Ansprüche, **dadurch gekennzeichnet, dass** die Ermüdungsschutzeinlage (7) aus einem Zweikomponentenmaterial hergestellt ist, das ein Polyolpolymer und ein Isocyanat umfasst.

7. Mehrzweck-Sicherheitsschuh (1) nach einem oder mehreren der vorhergehenden Ansprüche, **dadurch gekennzeichnet, dass** die obere Schicht (9) aus einer Durchtrittschutzlamelle (90) besteht.

8. Mehrzweck-Sicherheitsschuh (1) nach einem oder mehreren der vorhergehenden Ansprüche, **dadurch gekennzeichnet, dass** die Zwischenschicht (6) eine Vielzahl von Fenstern (12) umfasst, die entlang von Seitenflächen der Zwischenschicht (6) an dem hinteren Bereich des Mehrzweck-Sicherheitsschuhs (1) verteilt sind, wobei die Ermüdungsschutzeinlage (7) Seitenflächen davon durch die Fenster (12) freilegt.

9. Mehrzweck-Sicherheitsschuh (1) nach einem oder mehreren der vorhergehenden Ansprüche, **dadurch gekennzeichnet, dass** die Ermüdungsschutzeinlage (7) ein oder mehrere Durchgangslöcher (70) umfasst, die sich durch die Dicke der Ermüdungsschutzeinlage (7) hindurch erstrecken.

10. Mehrzweck-Sicherheitsschuh (1) nach einem oder mehreren der vorhergehenden Ansprüche, **dadurch gekennzeichnet, dass** die Ermüdungsschutzeinlage (7) aus einem Material mit einer Formdichte zwischen 0,3 und 0,36 g/cm³, vorzugsweise von etwa 0,35 g/cm³, hergestellt ist.

11. Mehrzweck-Sicherheitsschuh (1) nach einem oder mehreren der vorhergehenden Ansprüche, **dadurch gekennzeichnet, dass** die Rückprallelastizität des Materials, aus dem die Ermüdungsschutzeinlage (7) hergestellt ist, gemessen gemäß der Messnorm DIN 53512, geringer ist als die Rückprallelastizität des Polyurethans, aus dem die Zwischenschicht (6) hergestellt ist, gemessen gemäß der Messnorm DIN 53512, vorzugsweise um mindestens 5 Prozentpunkte geringer.

12. Mehrzweck-Sicherheitsschuh (1) nach einem oer mehreren der vorhergehenden Ansprüche, **dadurch gekennzeichnet, dass** die Ermüdungsschutzeinlage (7) aus ungeschäumtem Polyurethan hergestellt ist.

13. Mehrzweck-Sicherheitsschuh (1) nach einem oder mehreren der Ansprüche 7 bis 12, **dadurch gekennzeichnet, dass** die Durchtrittschutzlamelle (90) in direktem Kontakt mit einer oberen Fläche der Ermüdungsschutzeinlage (7) steht.

## Revendications

1. Chaussure de sécurité polyvalente (1), comprenant un ensemble de tige (2), pourvu, au niveau du bout de la chaussure, d'un embout de sécurité (4) et d'une semelle multicouche (3) associée audit ensemble de tige (2), ladite semelle multicouche (3) comprenant une couche inférieure (5) adaptée pour venir en contact avec le sol, une couche intermédiaire (6) associée audit ensemble de tige (2) et à ladite couche inférieure (5), respectivement, et une couche supérieure (9),
**caractérisée en ce que**
sous ladite couche supérieure (9) et dans ladite couche intermédiaire (6), un insert anti-fatigue (7) s'étend, dans une zone arrière de ladite chaussure de sécurité polyvalente (1), sensiblement sur une surface comprise entre 20 % et 55 % de la surface totale de ladite semelle multicouche (3), fait d'un matériau ayant une résilience supérieure à 25 % et inférieure à 35 % mesurée selon la norme de mesure DIN 53512, ladite couche intermédiaire (6) étant faite de polyuréthane ayant une résilience supérieure à 35 % et inférieure à 45 % mesurée selon la norme de mesure DIN 53512.

2. Chaussure de sécurité polyvalente (1) selon la revendication 1, **caractérisée en ce que** ladite couche intermédiaire (6) est faite de polyuréthane ayant une résilience supérieure à 41 %.

3. Chaussure de sécurité polyvalente (1) selon la revendication 1 ou 2, **caractérisée en ce que** ledit insert anti-fatigue (7) comprend au moins un polymère polyol.

4. Chaussure de sécurité polyvalente (1) selon une ou plusieurs des revendications précédentes, **caractérisée en ce que** ladite couche intermédiaire (6) est faite de polyuréthane ayant une masse volumique de moulage inférieure à 0,43 g/cm³, de préférence comprise entre 0,37 et 0,41 g/cm³.

5. Chaussure de sécurité polyvalente (1) selon une ou plusieurs des revendications précédentes, **caractérisée en ce que** ledit insert anti-fatigue (7) a une épaisseur d'au moins 8 millimètres.

6. Chaussure de sécurité polyvalente (1) selon une ou plusieurs des revendications précédentes, **caractérisée en ce que** ledit insert anti-fatigue (7) est fait d'un matériau bicomposant comprenant un polymère polyol et un isocyanate.

7. Chaussure de sécurité polyvalente (1) selon une ou plusieurs des revendications précédentes, **caractérisée en ce que** ladite couche supérieure (9) est constituée d'une lame anti-perforation (90).

8. Chaussure de sécurité polyvalente (1) selon une ou plusieurs des revendications précédentes, **caractérisée en ce que** ladite couche intermédiaire (6) comprend une pluralité de fenêtres (12) réparties le long de surfaces latérales de ladite couche intermédiaire (6) au niveau de ladite zone arrière de ladite chaussure de sécurité polyvalente (1), ledit insert anti-fatigue (7) laissant apparaître des surfaces latérales de celui-ci à travers lesdites fenêtres (12).

9. Chaussure de sécurité polyvalente (1) selon une ou plusieurs des revendications précédentes, **caractérisée en ce que** ledit insert anti-fatigue (7) comprend un ou plusieurs trous traversants (70) qui traversent l'épaisseur dudit insert anti-fatigue (7).

10. Chaussure de sécurité polyvalente (1) selon une ou plusieurs des revendications précédentes, **caractérisée en ce que** ledit insert anti-fatigue (7) est fait d'un matériau ayant une masse volumique de moulage comprise entre 0,3 et 0,36 g/cm³, de préférence d'environ 0,35 g/cm³.

11. Chaussure de sécurité polyvalente (1) selon une ou plusieurs des revendications précédentes, **caractérisée en ce que** la résilience dudit matériau dont est fait ledit insert anti-fatigue (7), mesurée selon la norme de mesure DIN 53512, est inférieure à la résilience dudit polyuréthane dont est faite ladite couche intermédiaire (6), mesurée selon la norme de mesure DIN 53512, de préférence inférieure d'au moins 5 points de pourcentage.

12. Chaussure de sécurité polyvalente (1) selon une ou plusieurs des revendications précédentes, **caractérisée en ce que** ledit insert anti-fatigue (7) est fait de polyuréthane non expansé.

13. Chaussure de sécurité polyvalente (1) selon une ou plusieurs des revendications 7 à 12, **caractérisée en ce que** ladite lame anti-perforation (90) est en contact direct avec une face supérieure dudit insert anti-fatigue (7).
